(19) Europäisches Patentamt
European Patent Office
Office européen des brevets

(11) EP 2 566 725 B1

(12) **EUROPÄISCHE PATENTSCHRIFT**

(45) Veröffentlichungstag und Bekanntmachung des Hinweises auf die Patenterteilung:
**06.08.2014 Patentblatt 2014/32**

(51) Int Cl.:
*B60R 21/017* (2006.01)          *H02J 7/14* (2006.01)
*H02J 7/34* (2006.01)          *H02M 3/156* (2006.01)
*B60R 16/03* (2006.01)

(21) Anmeldenummer: **11708028.3**

(22) Anmeldetag: **10.03.2011**

(86) Internationale Anmeldenummer:
**PCT/EP2011/053615**

(87) Internationale Veröffentlichungsnummer:
**WO 2011/138080 (10.11.2011 Gazette 2011/45)**

(54) **STEUERGERÄT FÜR EINEN BETRIEB EINES SICHERHEITSSYSTEMS FÜR EIN FAHRZEUG UND VERFAHREN FÜR EINEN BETRIEB EINES SOLCHEN SICHERHEITSSYSTEMS FÜR EIN FAHRZEUG**

CONTROLLER FOR OPERATING A SAFETY SYSTEM FOR A VEHICLE AND METHOD FOR OPERATING SUCH A SAFETY SYSTEM FOR A VEHICLE

APPAREIL DE COMMANDE POUR LE FONCTIONNEMENT D'UN SYSTÈME DE SÉCURITÉ D'UN VÉHICULE ET PROCÉDÉ DE FONCTIONNEMENT D'UN TEL SYSTÈME DE SÉCURITÉ DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2010 DE 102010028544**

(43) Veröffentlichungstag der Anmeldung:
**13.03.2013 Patentblatt 2013/11**

(73) Patentinhaber: **Robert Bosch GmbH 70442 Stuttgart (DE)**

(72) Erfinder:
• **SIEVERS, Falko 72762 Reutlingen (DE)**
• **SCHUMACHER, Hartmut 71691 Freiberg (DE)**
• **LIST, Carsten 71642 Ludwigsburg (DE)**

(56) Entgegenhaltungen:
EP-A1- 1 786 089          DE-A1-102004 057 690
DE-A1-102009 022 822          DE-B4- 19 542 085
DE-U1-202009 007 299          US-A1- 2009 066 277
US-B1- 6 963 497

EP 2 566 725 B1

**Beschreibung**

Stand der Technik

Die Erfindung betrifft ein Steuergerät bzw. ein Verfahren für einen Betrieb eines Sicherheitssystems für ein Fahrzeug nach der Gattung der unabhängigen Patentansprüche.

Aus DE 195 42 085 B4 ist eine Sicherheitseinrichtung für Fahrzeuginsassen bekannt, wobei ein Kondensator für die Energiespeicherung und ein erster Spannungswandler vorgesehen sind, der mit der Fahrzeugbatterie verbunden ist und der die Spannung der Fahrzeugbatterie auf ein Mehrfaches der Spannung der Fahrzeugbatterie hinaufsetzt und mit dieser höheren Spannung den Kondensator auflädt. Ein zweiter Spannungswandler ist dafür vorgesehen, über seinen Ausgang mit einem Eingang eines Spannungsstabilisators verbunden zu sein. Weiterhin ist ein die Spannungswandler steuernder Mikrocontroller vorgesehen, und dass die Spannungswandler von einer seriellen Schnittstelle des Mikrocontrollers steuerbar sind. Aus DE 10 2004 057 690 A1 ist eine Vorrichtung und ein Verfahren zum Laden einer elektrischen Energiespeichereinrichtung bekannt. Dabei ist eine aktive Strombegrenzung in einem Hauptstrompfad vorgesehen, um einen Versorgungsstrom auf einen bestimmten Maximalstrom zu begrenzen. Eine Spannungswandlereinrichtung ist der Strombegrenzungseinrichtung zum Anheben des Potentials der elektrischen Energiespeichereinrichtung über ein Versorgungspotential nachgeschaltet angeordnet.

Offenbarung der Erfindung

Das erfindungsgemäße Steuergerät bzw. das erfindungsgemäße Verfahren für einen Betrieb eines Sicherheitssystems für ein Fahrzeug haben demgegenüber den Vorteil, dass nunmehr wenigstens ein Abwärtswandler invertiert zum Aufwärtswandler betrieben wird, wobei der Abwärtswandler die Ladespannung oder die vom Energiespeicher ausgegebene Spannung abwärts wandelt. Damit ist eine Reduktion eines Wechselanteils, also einer Wechselspannung am Ausgang des Aufwärtswandlers möglich, weil durch den invertierten Betrieb im Moment der Energieabgabe (Freilauf) des Aufwärtswandlers durch den wenigstens einen Abwärtswandler Energie aufgenommen wird. Folglich wird eine dynamische Balance erzielt, die mit einem geringen Wechselanteil am Ausgang des Aufwärtswandlers einhergeht.

Unter einem Steuergerät ist vorliegend ein elektrisches Gerät zu verstehen, das Sensorsignale verarbeitet und in Abhängigkeit davon ein Sicherheitssystem, wie es beispielsweise ein passives Personenschutzsystem mit Airbags und Gurtstraffern ist, ansteuert. Das Steuergerät weist üblicherweise ein eigenes Gehäuse aus Metall und/oder Kunststoff auf; es kann jedoch auch, zumindest teilweise, mit verteilten Komponenten auf verschiedene Geräte aufgebaut sein. Aktive und passive Sicherheit können dabei in einem gemeinsamen Gehäuse angeordnet sein.

Der Betrieb des Sicherheitssystems heißt, dass das Sicherheitssystem in einem sicherheitsrelevanten Fall, für den es ausgelegt ist, aktiviert wird. Kommt es beispielsweise zu einem Unfall, der die Ansteuerung eines Airbags notwendig macht, wird das Steuergerät ein Ansteuerungssignal ausgeben, um die entsprechenden Airbags anzusteuern.

Unter dem Sicherheitssystem wird vorliegend ein passives Sicherheitssystem wie Airbags oder Gurtstraffer, aber auch ein aktives Sicherheitssystem, wie eine elektronische Stabilitätsregelung des Fahrzeugs oder einer Antischlupfregelung verstanden.

Ein Aufwärtswandler ist ein üblicherweise elektronisches Bauteil mit einer Induktivität, das die Eingangsspannung auf eine im Vergleich zur Eingangsspannung erhöhte Ausgangsspannung wandelt. Dafür ist der Aufwärtswandler als ein Schaltwandler ausgebildet. Ein solcher Aufwärtswandler weist beispielsweise eine Induktivität mithin eine Spule, die in Reihe mit einer Freilaufdiode oder einem Freilauftransistor, der vorliegend integriert realisierbar ist, geschaltet ist. Hinter der Freilaufdiode ist ein Ladekondensator vorgesehen, der die Ausgangsspannungen aufsummiert. Die Spule wird durch einen Schalter gegen Masse geschaltet. An der Spule fällt eine Eingangsspannung ab, wobei der Strom durch die Spule und damit die im Magnetfeld gespeicherte Energie ansteigt. Wird der Schalter geöffnet, versucht die Spule den Stromfluss aufrechtzuerhalten. Die Spannung an ihrem sekundären Ende steigt sehr schnell an, bis die am Kondensator anliegende Spannung übersteigt und die Diode öffnet. Der Strom fließt im ersten Moment unverändert weiter und lädt den Kondensator weiter auf. Das Magnetfeld bricht dabei zusammen und gibt seine Energie ab, indem es den Strom über die Diode in den Ladekondensator und zur Last treibt. Allgemein ausgedrückt wirkt die Induktivität im Ladevorgang als eine Last und absorbiert Energie und im Entladevorgang wirkt diese als eine Energiequelle, ähnlich einer Batterie. Daher unterscheidet man die Ladephase und die sogenannte Freilaufphase. In der Freilaufphase wird Energie zum Ausgang des Aufwärtswandlers transportiert.

Die von der Fahrzeugbatterie abgeleitete Eingangsspannung ist beispielsweise eine gefilterte und verpolgeschützte Spannung, die sich direkt von der Fahrzeugbatteriespannung ableitet.

Die Ladespannung am Ausgang des Aufwärtswandlers ist höher als die Eingangsspannung, so dass sich der Begriff des Aufwärtswandlers erklärt.

Der wenigstens eine Energiereservespeicher ist üblicherweise ein oder mehrere Kondensatoren, der mit der Ladespannung, die am Ausgang des Aufwärtswandlers anliegt, für den Betrieb des Sicherheitssystems in einem Autarkiefall aufgeladen wird. Der Autarkiefall ist, wenn die Versorgung zur Fahrzeugbatterie in Folge beispielsweise eines Unfalls abbricht. Bei der im Betrieb programmierbaren Ladestromquelle handelt es sich üblicherweise um einen Stromregler. Dabei handelt es sich um eine Transistorschaltung, die wie ein Stromventil wirkt, wobei eine Logik enthalten ist, die die Programmierung in einen entsprechenden Stromwert umsetzt. Damit kann der Ladestrom während dem Betrieb, d. h. wenn das Fahrzeug eingeschaltet ist und die Batteriespannung anliegt, abhängig von der Situation eingestellt werden. Diese Programmierung kann beispielsweise der Mikrocontroller im Steuergerät ausführen. Die programmierbare Ladestromquelle kann als Stromspiegel oder als Stromregler mit Shuntwiderstand ausgeführt sein.

Programmierung heißt vorliegend, dass im Betrieb die Ladestromquelle Signale erhält, die die Ladestromquelle derart interpretiert, dass sie einen Wert für den Ladestrom ergeben.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens für einen Betrieb eines Sicherheitssystems für ein Fahrzeug möglich.

Vorteilhafterweise sind der Aufwärtswandler und der wenigstens eine Abwärtswandler miteinander unmittelbar verbunden. Das bedeutet es gibt wenigstens eine Leitung, die vom Ausgang des Aufwärtswandlers in den Eingang des Abwärtswandlers führt. Dabei ist es möglich, dass Kondensatoren und/oder Widerstände an diese Leitung angeschlossen sind.

Es ist weiterhin vorteilhaft, dass am Ausgang des Aufwärtswandlers eine kapazitive Last zur Summierung der abgegebenen induktiven Schaltströme des Aufwärtswandlers abgegeben über eine Freilaufdiode oder einem synchrone gesteuerten Freilauftransistor angeschlossen ist. Diese kapazitive Last sollte möglichst klein sein. Das ist erreichbar durch einen Wandler mit hoher Taktfrequenz mit 1 bis 10 MHz. Die Zielwerte sollten in einem Bereich von 1 bis 20 $\mu$ F liegen und durch sogenannte Multi Layer Ceramic Chip Capacitors (MLCC) realisiert sein. Durch Reduzierung der Ausgangskapazität des Aufwärtswandlers auf diese Werte sind keine weiteren Maßnahmen zur Anlaufstrombegrenzung aus dem Bordnetz notwendig (Kostenreduzierung). Der Anlaufstrom beschränkt sich auf wenige $\mu$s (<30$\mu$s) und wird in der Amplitude sehr stark durch die Impedanz des Bordnetzes bestimmt. Außerdem kann durch diese kapazitive Last ein stabiler Betrieb des Aufwärtswandlers erreicht werden. Dies wird ermöglicht durch Abstimmung des Reglers auf diese Last. Dazu muss eine Mitkopplung sicher vermieden werden (Instabilität). Dies kann gezielt durch die Nutzung von unvermeidlichen Serienwiderständen / Induktivitäten zwischen Freilaufkreis und Ausgangskapazität (Definition des Widerstandes / Induktivität der Leiterbahn, Bonddrähten zwischen Freilaufdiode und Ausgangskapazität) ohne zusätzliche Kosten verbessert werden.

Darüber hinaus ist es vorteilhaft, dass das Steuergerät eine Logik aufweist, die in Abhängigkeit von wenigstens einem elektrischen Parameter am wenigstens einen Energiereservespeicher während des Aufladens des Energiereservespeichers eine initiale Messung einer Kapazität des wenigstens einen Energiereservespeichers und im Anschluss daran eine Messung eines äquivalenten Innenwiderstands des wenigstens einen Energiereservespeichers ausführt. Diese Logik ist üblicherweise im Mikrocontroller vorhanden, der die dazu nötigen Daten über beispielsweise den Spannungsverlauf am wenigstens einen Energiereservespeicher ausliest. Über die SPI-Schnittstelle und in Abhängigkeit davon werden die initiale Messung der Kapazität und die Messung des Innenwiderstands ausgelöst. Der Begriff des Aufladens des wenigstens einen Energiespeichers ist vorliegend dahingehend gemeint, dass dies das Aufladen des Energiespeichers nach einem Einschalten bzw. Power-On des Steuergeräts ist.

Vorteilhafter Weise weist die Logik wenigstens einen Komparator für einen Vergleich des wenigstens einen elektrischen Parameters, üblicherweise einer Spannung vorliegend beispielsweise die über dem elektrischen Energiereservespeicher mit einer vorgebbaren Schwelle aufweist, wobei die initiale Messung der Kapazität und die Messung des Innenwiderstands in Abhängigkeit von diesem Vergleich ausgeführt wird. D. h. erreicht die Spannung über dem Energiereservespeicher mit dem Kondensator einen vorgegebenen Wert, dann wird die Messung der Kapazität ausgeführt. Durch die Verwendung beispielsweise von zwei Komparatorwerten kann die Ladezeit mittels eines integrierten Zählers, beispielsweise 10bit/10KHz, ermittelt werden, die benötigt wird, um ein vorgegebenes Messband zu durchlaufen. Als Messstrom kann dabei einheitlich 90 mA verwendet werden. Damit ergibt sich die Kapazität nach folgender Formel:

$$CER = Messstrom \times Ladezeit/Messband.$$

Auch für die Messung des sogenannten äquivalenten Innenwiderstands der Energiereserve mithin Energiereservespeichers können zwei Komparatorwerte verwendet werden, um festzustellen, ob der Innenwiderstand des Energiereservespeichers ausreichend klein ist. Beispielsweise bei einer Messstromänderung von 90 mA auf 930 mA wird eine Spannungsänderung beispielsweise 0,5V realisiert durch eine Komparatorschwelle 10 $\mu$s nach Ändern des Messstroms abgefragt. Ist diese überschritten, so beträgt der Innenwiderstand beispielsweise < 0,6 Ohm. Bei einer Spannungsänderung von beispielsweise 1V wird eine zweite Komparatorteststelle nach Anlegen des Messstroms abgefragt. Ist diese überschritten, so beträgt der Innenwiderstand mehr als 1,2 Ohm. Die Ablaufsteuerung kann mithin im Mikrocontroller, aber auch durch Logik im ASIC hardwaremäßig realisiert sein. Ebenso kann die Messeinrichtung durch den ADC (Analog-Digital-Converter) des Mikrocontrollers oder durch Spannungs-Komparatoren und Zähler im System-ASIC realisiert sein. Den Start der Messung kann der Mikrokontroller im ASIC anregen, der genaue Startzeitpunkt erfolgt durch die Hardware beim Erreichen von VER_min. Das Anregen kann z.B. durch Lesen des Ergebnisregisters der initialen Kapazität erfolgen. Das Ergebnisregister wird nicht überschieben, wenn keine Messung ausgeführt wird.

Weiterhin ist es vorteilhaft, dass die Logik derart ausgebildet ist, dass die Logik nach dem Aufladen des Energiereservespeichers zyklisch eine weitere Messung der Kapazität ausführen kann. Auch hierfür kann eine Komparatorschwelle verwendet werden. Diese Messung startet nach einem Lesevorgang des Mikrocontrollers auf das Ergebnisregister der zyklischen Kapazitätsmessung. Durch diesen Vorgang wird die Ladestromquelle gesperrt. Die Spannung sinkt durch nicht kostenrelevante Lasten, beispielsweise an einem Spannungsteiler ab. Erreicht die Spannung über dem Energiereservespeicher einen vorgegebenen Wert, so wird mit dem Messstrom die Energiereserve wieder geladen, bis ein weiterer Wert erreicht wird. Durch die Wahl eines verringerten Messhubs und eines darauf entsprechend abgestimmten Messstroms bleibt die Auflösung von µF zu Digit exakt auf dem Wert der initialen Kapazitätsmessung.

In einer Weiterbildung ist vorgesehen, dass Messfehler in der Kapazitäts- und Innenwiderstandsmessung vermieden werden als Folge eines Einbruchs der Batteriespannung, indem die Eingangsspannung mit einem Komparator überwacht wird. Sinkt diese unter den durch den Komparator vorbestimmten Wert, wird jede laufende Messung mit nicht ausführbar in einem Messspeicher gekennzeichnet. Eine Alternative dazu ist, dass der Stromregler der Ladestromquelle einen Einregelstatus in der Messanwendung erzeugt. Nur wenn dieser bis auf Einschwfngzeiten die gleiche Einregelzeit erreicht wie die Messzeit selbst, ist die laufende Messung ohne Störung verlaufen und damit als gültig anzusehen. D.h. die Einregelung erfolgt sofort auf den Zielstrom und verbleibt in diesem eingeregelten Zustand bis zum Ende der Messzeit. Andernfalls erhält der Messwert im Messspeicher eine "nicht-ausführbar-Kennzeichnung". Zur Erfassung des Ein-Regel-Status kann ebenfalls ein 10-Bit-Zähler mit einer Taktfrequenz von 10 kHz eingesetzt werden. Auch geringere Auflösungen sind denkbar.

Es ist weiterhin vorteilhaft, dass die Aufladung des wenigstens einen Energiereservespeichers durch die Ladestromquelle in einem ersten Zeitabschnitt und einem dritten Zeitabschnitt mit einem ersten Stromniveau, in einem zweiten Zeitabschnitt mit einem Teststrom und in einem vierten Zeitabschnitt mit einem zweiten Stromniveau, das unter dem ersten Stromniveau liegt, erfolgt, wobei der erste, zweite, dritte und vierte Zeitabschnitt in dieser Reihenfolge aufeinander folgen und im zweiten Zeitabschnitt eine initiale Messung der Kapazität und des Innenwiderstands des Energiereservespeichers erfolgen. Die Umschaltung zwischen dem ersten Stromniveau und dem Teststromniveau sowie zwischen dem ersten und dem zweiten Stromniveau erfolgt aufgrund einer Spannung über dem Energiereservespeicher. D. h. die Spannung über dem Energiereservespeicher wird mit vorgegebenen Schwellwerten verglichen.

Es ist weiterhin vorteilhaft, dass das Steuergerät im Energiesparmodus anläuft. Da sich nahezu synchrone mit dem Einschalten der Steuergerätespannung die Aufwärtswandler Ausgangsspannung bilden kann, da der oder die Energiereservespeicher nicht geladen werden (Ladestromquelle bleibt zunächst gesperrt). Durch wenigstens einen an den Ausgang des Aufwärtswandlers angeschlossenen Abwärtswandler wird der Rechner (Mikrocontroller mit elektrischer Energie versorgt, d. h. vorliegend ist ein Energiesparmodus vorgesehen, der die Entnahme aus der Fahrzeugbatterie verringert, indem vorteilhafter Weise die Ladestromquelle dazu genutzt wird, diese Aufladung des Steuergeräte internen Energie-Speichers aus dieser zu vermeiden bzw. erst durchzuführen wenn dies gewünscht ist (µC- Programm, Datentransfer über CAN, FLEXRAY, LIN). Beim Abwärtswandler wird die Eingangsspannung auf eine geringere Ausgangsspannung gewandelt. Eine vorteilhafte Ausprägung der Abwärtswandlerkonfiguration ist zwei Abwärtswandler in Serie zu schalten, die die Spannung schrittweise herunterwandeln. Diese beiden Abwärtswandler sind genauso kapazitiv belastet wie der Aufwärtswandler. Dieser Energiesparmodus wird beispielsweise für Autos in Ausstellungsräumen eingesetzt, indem beispielsweise über einen Diagnosetester das Steuergerät den Befehl erhält, in diesen Energiesparmodus zu gehen. Andere Möglichkeiten für den Energiesparmodus sind keyless entry, bei dem ein definierter Zustand eingeschaltet wird, ohne die eigentliche Applikation zu starten.

Ausführungsbeispiele der Erfindung sind in der Zeichnung dargestellt und werden in der nachfolgenden Beschreibung näher erläutert.

Es zeigen

Figur 1 ein Blockschaltbild des erfindungsgemäßen Steuergeräts,
Figur 2 ein Flussdiagramm des erfindungsgemäßen Verfahrens,
Figur 3 ein weiteres Flussdiagramm des erfindungsgemäßen Verfahrens,
Figur 4 ein weiteres Blockschaltbild des erfindungsgemäßen Steuergeräts,
Figur 5 ein Zeitdiagramm für Transistoren in den Schaltwandlern,
Figur 6 ein Spannungszeitdiagramm,
Figur 7 ein weiteres Spannungszeitdiagramm.

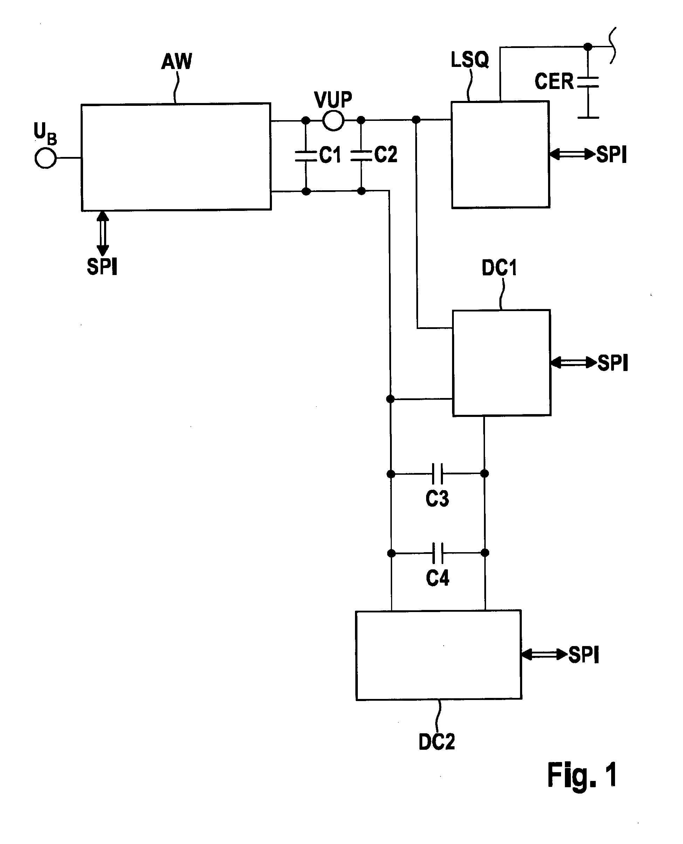

Figur 1 zeigt in einem Blockschaltbild einen Teil des Steuergeräts, der die Erfindung beinhaltet. Die Batteriespannung UB wird beispielsweise über Filter und/oder einen Verpolschutz an einen Aufwärtswandler AW, und zwar an dessen Eingang angelegt, so dass der Aufwärtswandler AW die Batteriespannung UB oder die davon abgeleitete Spannung auf ein vorgegebenes Niveau anhebt. Die Ausgangsspannung am parallel zum Ausgang über ein Stück Leiterbahn nachgeschalteten Kondensator C1 ist mit VUP bezeichnet. Der Aufwärtswandler AW ist vorwiegend über eine SPI-Schnittstelle steuerbar, dabei können vor allem folgende Parameter verändert werden: AN/AUS, Taktfrequenz, Flankensteilheit Transistor T1, T2, Strombegrenzung T1, T2, Ausgangsspannung 23...25V/ 31...35V). Die am Ausgang parallel geschalteten Kondensatoren C1 und C2 sind vorliegend die sogenannten Multi Layer Ceramic Chip Capacitors (MLCC), die eine Größe von 1 bis 20 μF aufweisen und einen stabilen Betrieb des Aufwärtswandlers gewährleisten. Diese Kondensatoren C1 und C2 weisen eine niedrige Impedanz auf, aber bei der hohen Wandlerfrequenz, die vorliegend verwendet wird, nämlich beispielsweise 1800 bis 2200 kHz, wodurch sich Störungen im Mittelwellenbereich vermeiden lassen, wird dennoch eine stabile Regelung erreicht. Durch gezielte, definierte Layout-Maßnahmen lässt sich der Induktivitätsbelag von beispielsweise 5...15mOhm/5-10 nH pro Zentimeter der Anbindung dieser Wandlerausgangskapazitäten zur Erzielung von ausreichenden Impedanzwerten benutzen. Dabei hat sich ein Wert von 0,125Ohm für 1 cm Länge zu 0,5mm Breite zu 35μm Dicke zur Anbindung der Ausgangskapazität C1 und C2 als vorteilhaft erwiesen. Der vom Wandler abgegebene Strom ruft am Induktivitätsbelag von C1 und C2 ohne Zeitverzug eine Spannung hervor, wodurch eine stabile Regelung ermöglicht wird. Die in Figur 1 nachfolgend dargestellten Abwärtswandler DC1 und DC2, die an den Ausgang des Aufwärtswandlers AW in Serie angeschlossen sind, werden derart platziert, und zwar auf einem gemeinsamen ASIC, d. h. einer gemeinsam integrierten Schaltung, in der der Aufwärtswandler die beiden Abwärtswandler DC1 und DC2 sowie auch die Ladestromquelle LSQ angeordnet sind, dass die Wandlerausgangskapazität des Aufwärtswandler AW mit einer Leiterbahn von 1cm Länge/0,5mm Breite/35μm Dicke angeschlossen werden kann, wodurch ein Widerstandsbelag zu Induktivität von 5...15mOhm/5-10 nH entsteht und damit der Wandler in der Regel stabil ist. Gleichzeitig kann aber auch mit der selben Kapazität die Funktion einer Eingangspufferkapazität des folgenden Wandlers, d. h. DC1 und DC2 erzielt werden, wenn diese mit kleiner Leiterbahnenlänge von 0 bis 5mm an den Eingang der folgenden Wandlerstufe gekoppelt wird. Dadurch wird der Spannungsbrumm reduziert und die Abstrahlung verringert. Dieses Verfahren kann auch für die Kopplung der beiden Abwärtswandler DC1 und DC2 entsprechend verwendet werden.

Die Ausgangsspannung VUP, d. h. die anspruchsgemäße Ladespannung wird von der Ladestromquelle LSQ dazu verwendet, die am Ausgang der Ladestromquelle angeschlossene Energiereserve CER, das ist der Energiereservespeicher, aufzuladen, um für den Autarkiefall gerüstet zu sein. Die Zündung wird jedoch meist immer über diese Kapazität CER, d. h. auch im Nichtautarkiefall durchgeführt. Die Zielspannung ist hier mit VER bezeichnet. Auch die Ladungsstromquelle LSQ und auch die Abwärtswandler DC1 und DC2 sind über die serielle Schnittstelle SPI, vorzugsweise durch den Mikrocontroller, der vorliegend nicht dargestellt ist, ansteuerbar und programmierbar. Bezüglich der Ladestromquelle LSQ ist eine Programmierung dahingehend notwendig, welcher Strom zur Aufladung des Kondensators CER verwendet wird. Bei dem Kondensator CER handelt es sich üblicherweise um einen Elektrolytkondensatoren; es sind jedoch auch andere Kondensatortypen möglich. Ebenso kann auch die Höhe des Kapazitäts und ESR Messstromes einstellbar sein, ebenso die Taktfrequenz der Zeitmessung.

Die Ladestromquelle LSQ weist einen Stromregler auf. Ein solcher Stromregler regelt den Strom auf den programmierten Strom, der vom Mikrocontroller des Steuergeräts festgelegt wurde. Mit dieser Programmierung des Stroms ist es möglich, in der Aufladephase nach dem Einschalten des Steuergeräts bereits eine Initialmessung der Kapazität und des äquivalenten Innenwiderstands des Kondensators CER durchzuführen. Diese Messung ist notwendig, um die Funktionsfähigkeit dieses Kondensators nachzuweisen, so dass für die Zündung beispielsweise von Airbags oder Gurtstraffern die Energiereserve auch verwendet werden kann. Die Messergebnisse werden im Steuergerät vorteilhafterweise abgespeichert, um für einen späteren Funktionsnachweis zur Verfügung zu stehen. Komponenten, die nicht notwendig sind zum Verständnis der Erfindung, aber zum Betrieb des Steuergeräts gehören, sind der Einfachheit halber vorliegend weggelassen worden.

Durch die Einstellung des Ladestroms ist auch die Anstiegsgeschwindigkeit, mit der die Kapazität CER auf ihre vorgegebene Spannung aufgeladen wird, einstellbar. Außerdem sind Betriebsarten wie ein Stromsparmodus möglich, indem die Ladestromquelle in einem solchen Stromsparmodus den Kondensator CER nicht auflädt. Der Mikrocontroller, der in einem solchen Stromsparmodus, auch als Eco-Mode bezeichnet, betrieben werden soll, wird dann über die an den Aufwärtswandler direkt gekoppelten Abwärtswandler DC1 und DC2 mit der notwendigen Energie versorgt. Durch die Einstellung der Ladegeschwindigkeit der Energiereserve CER ist es möglich, eine vorgegeben System-Ready-Zeit einzustellen.

An die Energiereserve CER sind die Zündschaltungen angeschlossen, so dass die Energiereserve CER diese im Ansteuerungsfall mit Energie versorgen kann. Über die Abwärtswandler DC1 und DC2 werden die übrigen Komponenten des Steuergeräts im Autarkiefall versorgt.

Die Abwärtswandler DC1 und DC2 werden zumindest teilweise invertiert zum Aufwärtswandler AW betrieben. Auch sie weisen jeweils Induktivitäten auf und haben die Aufgabe, die Spannungen entsprechend herunterzuwandeln. An die Abwärtswandler sind Schnittstellen angeschlossen, um mit den entsprechenden Spannungspegeln die Elektronik im Steuergerät zu versorgen. Zu solchen Spannungspegeln wird weiter unten ausgeführt. Es ist möglich, dass der Abwärtswandler DC1 keine solche Versorgung vornimmt, sondern die Spannung auf ein erstes Niveau herunterwandelt, das der zweite Spannungswandler DC2 verwendet, um es weiter herunterzuwandeln. Außerdem sind die Abvyärtswandier DC1 und DC2 zumindest teilweise invertiert zum Aufwärtswandler AW betrieben. Wenn zumindest ein Abwärtswandler am Ausgang des Aufwärtswandler AW angeschlossen ist, wird die Spannung VUP reduziert und damit die Spannung VER ebenfalls. Bei fehlender Energiereserve CER oder defektem Aufwärtswandler wird die Batteriespannung auf die Ausgangsspannung dieses Abwärtswandlers reduziert. Der invertierte Betrieb von Auf- und Abwärtswandler bedeutet, dass im Aufwärtswandler die Ladephase gestartet wird und dann im Abwärtswandler die sogenannte Freilaufphase gestartet wird. Die Ladephase heißt, dass die Induktivität aufgeladen wird und die Freilaufphase, dass die Energie aus der Induktivität abgegeben wird. Zwischen diesen beiden Phasen wird in einem Schaltwandler geschaltet. Befindet sich der Aufwärtswandler AW in der Freilaufphase, d. h. in der Phase, in der Energie zum Ausgang VUP transportiert wird, so wird mit einer bestimmten Phasenüberdeckung vom Abwärtswandler DC1 sofort wieder Energie vom Ausgang VUP entnommen. Dadurch wird der Wechselanteil der VUP-Regelspannung reduziert und somit ein Beitrag geleistet mit möglichst kleinen, kostengünstigen Keramikkondensatoren am Ausgang VUP auszukommen. Die Keramikkondensatoren sind die Kondensatoren C1 und C2 bzw. zwischen den beiden Abwärtswandlern DC1 und DC2, C3 und C4.

An die Ausgangsspannung des Abwärtswandlers DC1 ist ein weiterer Abwärtswandler zur Erzeugung einer Spannung von 1,2 bis 3,3 V, die durch Hardware programmierbar sind, angeschlossen. Dieser zweite Abwärtswandler DC2 wird ebenso wie der erste DC1 invertiert zum Aufwärtswandler betrieben. Dadurch wird am Ausgang des ersten Abwärtswandlers exakt im Moment anwachsender Ausgangsspannung durch Energieabnahme durch den zweiten Abwärtswandler entgegengewirkt. Damit wird ebenfalls der Wechselanteil der Ausgangsspannung des ersten Abwärtswandlers DC1 verringert und damit die Reduzierung der Kapazität am Ausgang des ersten Abwärtswandlers von beispielsweise 150 $\mu$F auf ca. 30 $\mu$F unterstützt.

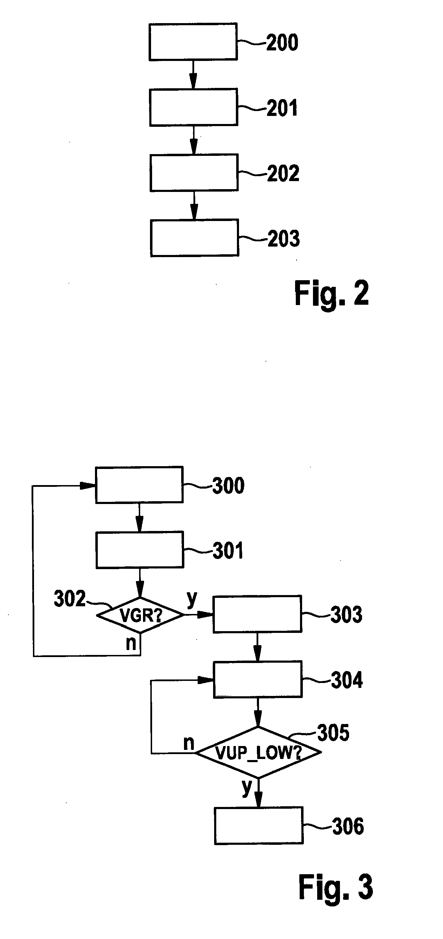

Das Flussdiagramm gemäß Figur 2 erläutert das erfindungsgemäße Verfahren. Im Verfahrensschritt 200 wird die Batteriespannung UB beispielsweise gefiltert oder verpol geschützt, aber zumindest bereitgestellt am Eingang des Aufwärtswandlers AW. Im Verfahrensschritt 201 führt dieser Aufwärtswandler AW das Aufwärtswandeln durch, indem er als Schaltwandler betrieben wird. Dadurch ist am Ausgang des Aufwärtswandlers AW die Spannung VUP messbar. Über die serielle Schnittstelle SPI wird die Ladestromquelle SLQ programmiert, so dass sie in Abhängigkeit von der Ladespannung VUP mit einem entsprechenden Strom den Kondensator CER, der der Energiereservespeicher oder Energiereserve oder Energiereservekondensator ist, aufgeladen wird, und zwar auf die Spannung VER. Dies erfolgt im Verfahrensschritt 203.

Figur 3 verfeinert dieses Flussdiagramm in einem weiteren Flussdiagramm, wobei der Verfahrensschritt 203 im Verfahrensschritt 300 aufgegriffen wird und die vorhergehenden Verfahrensschritten aus Figur 2 nun nicht mehr aufgeführt werden. Während dem Aufladen des Kondensators im Verfahrensschritt 300 wird im Verfahrensschritt 301 die Spannung am Kondensator gemessen, beispielsweise durch den Mikrocontroller oder durch den System-ASIC, der auch die Wandler selbst beinhaltet. Diese Spannung wird im Verfahrensschritt 302 geprüft, ob die Spannung am Kondensator die Schwelle VER_min erreicht hat. Ist das nicht der Fall, wird zum Verfahrensschritt 300 zurückgesprungen. Ist das jedoch der Fall, kann entweder direkt zum Verfahrensschritt 303 weitergegangen werden oder es wird solange gewartet bis ein Testbefehl über SPI ausgegeben wird, um die Kapazität des Kondensators CER und seines äquivalenten Innenwiderstand ESR initial zu messen. Danach wird das Aufladen im Verfahrensschritt 304 wieder aufgenommen. Die Messung der Kapazität bzw. auch die Messung des Innenwiderstands ESR wird mit einem Messstrom durchgeführt, der vom Ladestrom abweichen kann.

Im Verfahrensschritt 304 wird der Ladestrom aus Verfahrensschritt 300 wieder aufgenommen, entweder automatisch oder nach Aufforderung durch den Mikrocontroller $\mu$C über die serielle Schnittstelle SPI. In dieser zweiten Aufladephase wird im Verfahrensschritt 305 geprüft, ob die Ladespannung am Kondensator CER den Wert VUP_low erreicht hat, der höher ist als die Spannung VER_min. Ist dies nicht der Fall, wird die Aufladung mit dem Ladestrom fortgeführt. Ist das jedoch der Fall, wird im Verfahrensschritt 306 die Programmierung der Ladestromquelle LSQ derart geändert, dass nunmehr einen Erhaltungsstrom verwendet wird, der geringer als der Ladestrom aus den Verfahrensschritten 300 und 304 ist. Dieser Erhaltungsstrom wird verwendet, um die Zielspannung VUP zu erreichen und den Kondensator auf dieser Spannung zu halten. Der Aufwärtswandler wird mit einer derart hohen Frequenz betrieben und durch die Ausgangskondensatoren geglättet, dass die Ladestromquelle dies als Gleichstrom interpretiert.

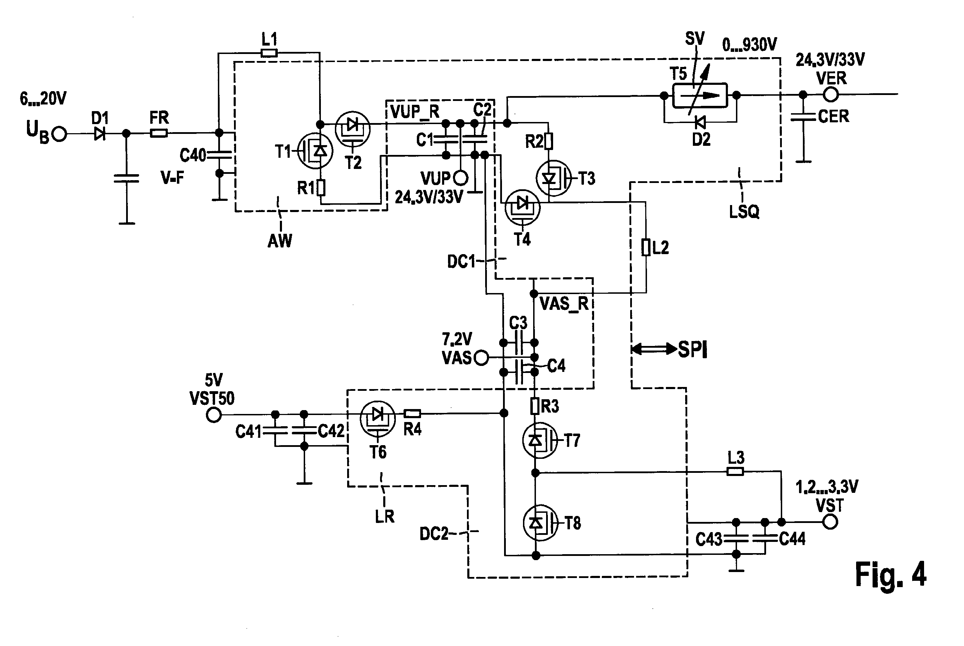

Figur 4 zeigt ein ausführliches Schaltbild von Komponenten des Steuergeräts, die die Erfindung beinhalten. Die Batteriespannung UB, die einen Wert zwischen 26 V annehmen kann, ist an einer Diode D1 in Flussrichtung angeschlossen, die als Verpolschutz dient. An die Diode D1 ist ein V-Filter V-F mit Ableitung gegen Masse angeschlossen , dies bezieht sich auf den Kondensator V-F und C40. An die Diode und den Kondensator V-F ist ein Ferrit FA angeschlossen, der an einen Eingangskondensator C40, der gegen Masse geschaltet ist und die Induktivität L1 des Aufwärtswandlers AW sowie den Eingang des Aufwärtswandlers AW bezüglich seiner Elektronik. Der Aufwärtswandler AW ist mit dem Abwärtswandlern DC1 und DC2 sowie einem Linearregler LR und der Ladungsstromquelle auf einem gemeinsamen System-ASIC integriert, der auch noch weitere Komponenten beinhalten kann. Dieser System-ASIC kann die Komponenten auf einem einzigen Substrat oder auf mehreren Substraten enthalten.

Der Aufwärtswandler AW weist den N-Kanal Ladetransistor T1 auf, der über seinen Drainanschlüsse an die Induktivität L1 und über seinen Sourceanschluss über einen Widerstand R1 gegen Masse angeschlossen ist. Außerdem ist ein Freilauf P-Kanal Transistor T2 vorhanden, dieser ist mit seinem Sourceanschluss an die Induktivität und den Transistor T1 (Drain) angeschlossen und mit seinem Drainanschluss mit dem Eingang des Aufwärtswandler-Reglers $VUP_r$ verbunden. Anstelle des synchron gesteuerten Transistors T2 kann auch eine einfache ultra-schnelle Freilaufdiode (Shottky-Diode) verwendet werden. Diese ist mit der Anode an der Induktivität und T1 (Drain) angeschlossen und mit der Kathode an VUPr.

An VUPr ist die Parallelschaltung der Kondensatoren C1 und C2 angeschlossen. In dieser Parallelschaltung wird die Spannung VUP, die zwischen 22 und 34 V ist, abgegriffen. Die Spannung wird beispielsweise vom Mikrocontroller μC gemessen. Die Ladespannung VUP ist mit dem Eingang der Ladestromquelle LSQ verbunden, die eine Parallelschaltung des Stromventils SV sowie einer entgegen Flussrichtung geschalteten Diode D2 aufweist, um einen Rückfluss aus dem Kondensator CER, der an den Ausgang der Ladestromquelle LSQ angeschlossen ist, zu ermöglichen. Als Stromventil SV wird ein Transistor T5 verwendet. Die Diode D2 ist in der Regel Bestandteil von dem Transistor T5. Ein Strom ist dabei zwischen 0 und 930 mA über die SPI-Schnittstelle programmierbar. Der an den Ausgang der Ladestromquelle LSQ angeschlossene Kondensator CER ist gegen Masse geschaltet und weiterhin an den Zündkreis, der nicht dargestellt ist, angeschlossen. Die Spannung VUP wird jedoch nicht nur von der Ladestromquelle LSQ aufgenommen, sondern auch von dem Abwärtswandler DC1, der die Spannung VUP in die Spannung VAS, nämlich 7,2 V abwärts wandelt. Der Abwärtswandler DC1 ist invertierend an den Aufwärtswandler AW angeschlossen, um den Wechselanteil an der Regelspannung VUP zu reduzieren.

Die Spannung VUP wird über einen Stromshunt R2 im Abwärtswandler DC1 mit einem nachfolgend geschalteten Ladetransistor T3 (P-Kanal) am Source verbunden und über seinen Drain an die Induktivität L2 des Abwärtswandlers angeschlossen. Ein weiterer synchroner Freilauftransistor T4 (N-Kanal) ist mit dem Sourceanschluss an Masse geschaltet und mit dem Drainanschluss an die Induktivität L2 sowie dem Drain von T3. Anstelle von T4 kann auch eine einfache ultraschnelle Freilaufdiode (Shottky Diode) eingesetzt werden. Diese ist an der Anode mit Masse verbunden und mit der Kathode an die Induktivität L2 und den Drain des Transistors T3 angeschlossen. Die Induktivität L2 ist an den Regeleingang des Abwärtswandlers DC1 angeschlossen und bildet hier die Regelspannung $VAS_r$. Auch hier ist wie beim Aufwärtswandler dieser Regeleingang zusammen mit der Stromzuführung von L2 an eine kapazitive Last angeschlossen, nämlich die Kondensatoren C3 und C4 die den Ausgang des Abwärtswandlers bilden. Zwischen C3/C4(+) und dem Massefußpunkt lässt sich die abwärtsgewandelte Spannung VAS abgreifen. Diese Spannung VAS von 6.4V... 7.2V wird vorliegend vom Abwärtswandler DC2 aufgenommen, der dafür den Stromshunt R3 die Schalttransistoren T7 und T8 aufweist und die Induktivität L3. DC2 ist analog* zu DC1 aufgebaut. Damit wird die Ausgangsspannung VST gebildet, die zwischen 1,2 und 3,3 V liegt und von den Komponenten im Steuergerät aufgenommen wird. Über einen Linearregler LR, der an den Abwärtswandler DC1 angeschlossen ist, wird die Spannung von 5 V nach einem Stromshunt R4 und dem Regel-Transistor T6 ausgegeben. Diese Spannung kann der Versorgung für den CAN-Bus bzw. Flexray-Bus dienen kann. Auch an diesen Ausgang des Linearreglers LR ist eine kapazitive Last mit den Kondensatoren C41 und C44, die parallel aus Redundanzgründen geschaltet sind, vorgesehen.

Auch der Abwärtswandler DC2 besitzt einen P-Kanal Ladetransistor T7 und einen N-Kanal Freilauftransistor T8 oder anstelle von T8 eine Freilaufdiode. Die Spannung VAS wird über einen Stromshunt R3 im Abwärtswandler DC2 mit einem nachfolgend geschalteten Ladetransistor T7 (P-Kanal) am Source verbunden und über seinen Drain an die Induktivität L3 des Abwärtswandlers angeschlossen. Ein weiterer synchroner Freilauftransistor T8 (N-Kanal) ist mit dem Sourceanschluss an Masse geschaltet und mit dem Drainanschluss an die Induktivität L3 sowie dem Drain von T7. Anstelle von T8 kann auch eine einfache ultraschnelle Freilaufdiode (Shottky Diode) eingesetzt werden. Diese ist an der Anode mit Masse verbunden und mit der Kathode an die Induktivität L3 und den Drain des Transistors T7 angeschlossen.

Auch der Ausgang des Abwärtswandlers DC2 ist mit der Parallelschaltung der Kondensatoren C43 und C44 kapazitiv belastet. Damit liegt eine Serienschaltung der Abwärtswandler DC1 und DC2 vor, die jeweils am Ausgang funktional gleich beschaltet sind wie der Aufwärtswandler AW, nämlich kapazitiv. Weiterhin werden die Wandler alle so betrieben, dass der Wechselanteil am Ausgang der Wandler reduziert wird. Dies führt zu einer höheren Stabilität.

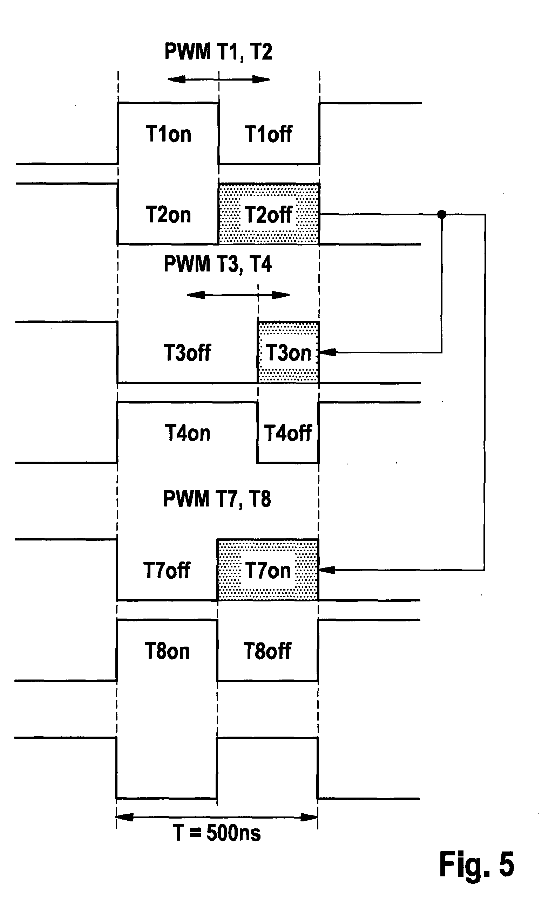

Figur 5 zeigt die Modulation der Transistoren der Schaltwandler AW, DC1 und D2. Sie zeigt insbesondere den invertierten Betrieb mit einer teilweisen Phasenüberdeckung. Dabei weist die obere Darstellung die Modulation über Pulsweitenmodulation der Transistoren T und T2 des Aufwärtswandlers AW an und zeigt dann die Transistoren an und abgeschaltet sind. In der ersten Phase ist die Ladephase zu sehen und in der zweiten Phase die Freilaufphase. Im mittleren Diagramm ist die Pulsweitenmodulation der Transistoren T3 und T4 zu sehen des Abwärtswandlers DC1, die eine teilweise Überdeckung von Lade- und Freigabephase zeigt, Hier ist es genau umgedreht, zunächst ist eine Freilaufphase zu sehen und dann eine Ladephase. Damit ist in der Freigabephase des Aufwärtswandlers AW auch eine Energieentnahme durch den Abwärtswandler DC1 zu sehen. Entsprechend ist das Verhältnis der beiden Abwärtswandler DC1 und DC2, was durch das mittlere und untere Zeitschema zu sehen ist. Der Takt der Wandler beträgt vorliegend 500 ns. Ein Takt umfasst die Lade- und Freigabephase.

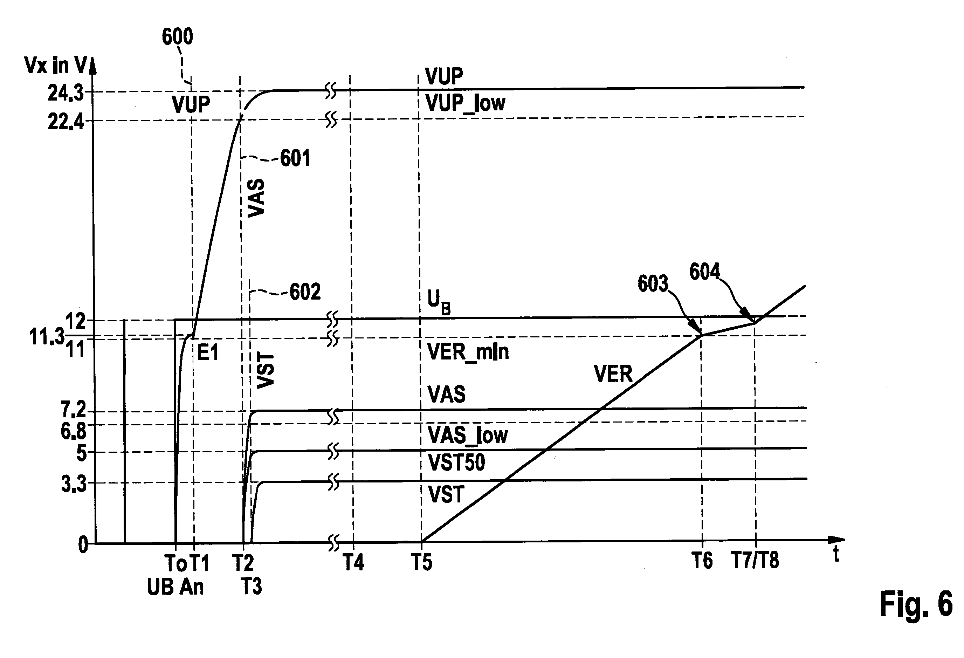

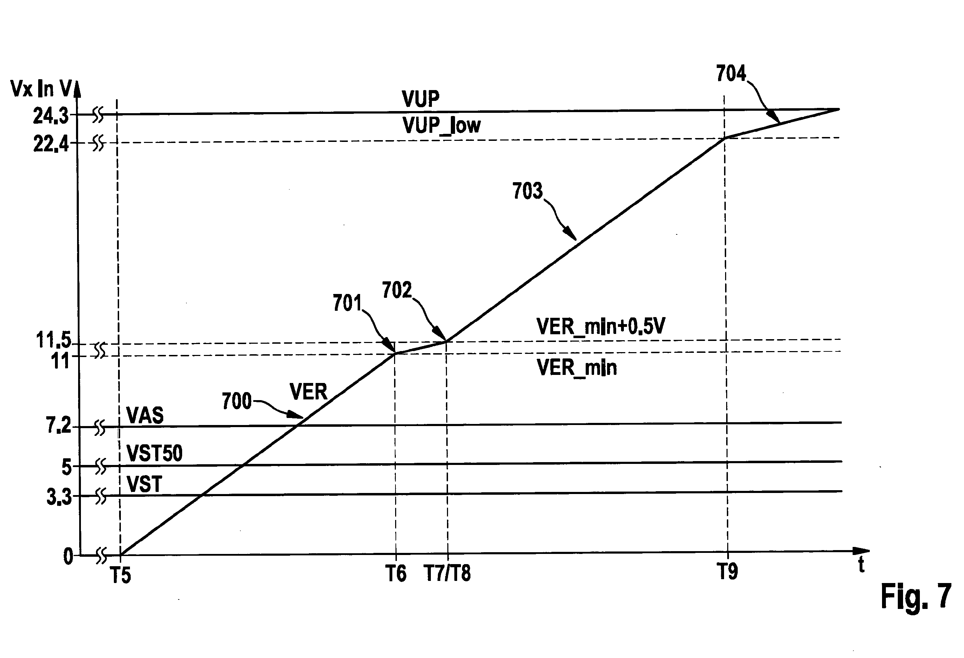

In den folgenden beiden Spannungszeitdiagrammen Figur 6 und 7 wird die Funktionsweise der Schaltung gemäß Figur 4 näher erläutert. Figur 6 zeigt die Spannungen vom Einschalten der Batteriespannung UB bis zur Messung des äquivalenten Innenwiderstands der Energiereserve CER. Figur 7 zeigt das Spannungszeitdiagramm vom Beginn der Aufladephase der Energiereserve CER bis zum Erreichen der Regelspannung durch die Energiereserve CER.

Figur 6 zeigt zum Zeitpunkt T0, dass die Spannungsversorgung eingeschaltet wird. Das ist die Batteriespannung UB, die beispielsweise 12 V erreicht. Der Schaltwandler läuft an 600 und gibt an seinem Ausgang die Spannung VUP aus. Der Anstieg entspricht der Versorgungsimpedanz des Fahrzeugs dem V-Filter V-F der Induktivität L1 und der kapazitiven Last C1 und C2. Dieser Anstieg ist vorliegend sehr schnell. Zum Zeitpunkt T1, das sind ungefähr 30 bis 70 $\mu$s nach T0, startet der Schaltwandler AW nach Aufbau von mindestens zwei stabilen ASICinternen Referenzspannungen und einer definierten Wartezeit, die sich durch einen Filter ergibt. Die Referenzspannungen werden auf eine Differenz geprüft, d.h. liegt ein Unterschied vor, liegt ein Fehler vor. Die Wartezeit wird mittels eines Zählers gemessen.

Zum Zeitpunkt T2 fängt nun auch der Abwärtswandler DC1 an zu laufen, was mit 601 bezeichnet ist. Dies geschieht sobald die Ausgangsspannung des Aufwärtswandlers VUP > als ein vorgegebener Wert VUP_low ist. Dies erkennt der Abwärtswandler DC1 selber.

Zum Zeitpunkt T3 startet nun auch der Schaltregler DC2, was mit 602 bezeichnet ist und auch der Linearregler LR sobald die Ausgangsspannung des ersten Abwärtswandlers DC1 einen vorgegebenen Schwellwert VAS_low überschreitet. Zum Zeitpunkt T4 erfolgt ein Power-On-Reset durch Freigabe nach Erstellung stabiler Spannungen. Vint ist eine interne Spannung, aus der die Referenzspannungen gebildet werden, und wird beispielsweise aus einer Zenerspannung gebildet. VRef1 ist eine sogenannte Bandgapspannung, die sich aus einer Transistor-Emitter-Spannung und einem additiven Anteil zur Temperaturkompensation zusammensetzt. Sie entspricht der Bandlücke des Siliziums. Die Ausgangsspannung VAS des ersten Abwärtswandlers ist in einem Regelband und auch die Spannungen des Linearregler LR und des zweiten Abwärtswandlers DC2 sind in einem jeweiligen Regelband und zwar nach einer definierten Ladezeit von 2 bis 20 ms, die über einen Zähler festgestellt wird. Die Spannungen werden durch den System-ASIC selbst überwacht, der die Wandler beinhaltet. Zum Zeitpunkt T5 erfolgt die Programmierung der Ladestromquelle LSQ durch den Mikrocontroller. Es erfolgt der Start der Energieserveladung durch einen Primärstromniveau von beispielsweise 210 mA. Damit steigt nun die Spannung an der Energiereserve VER linear an. Zum Zeitpunkt T6 erreicht die Spannung an der Energiereserve VER den Wert VER_min beispielsweise 11 V. Das Primärstromniveau wird automatisch auf einen Messstromniveau von beispielsweise 90 mA umgeschaltet und einen Zähler mit mindestens 10 Bit gestartet. Zum Zeitpunkt T7 erreicht die Spannung den Wert VER_min +0,5 V. Dann wird der Zähler gestoppt. Der Zählerstand wird als Kapazitätsmesswert bis zum nächsten Power-On-Reset gespeichert und es wird auch das Stromniveau für den Test des äquivalenten Innenwiderstands umgeschaltet. Dieses Stromniveau beträgt 930 mA.

Zum Zeitpunkt T8, das sind T7 + 10 $\mu$s wird geprüft, ob die Spannung über der Energiereserve CER <= VER_min + 1 V, und ob diese Spannung <= VER_min + 1,5 V ist. Die Entscheidungsflaggen werden bis zum nächsten Power-on-Reset gespeichert, danach wird auf das programmierte Primärstromniveau umgeschaltet.

Dies ist auch in Figur 7 gezeigt. Das Primärstromniveau führt zum ersten Anstieg 700 zwischen den Zeitpunkten T5 und T6, die Messung zwischen Kapazität und des äquivalenten Innenwiderstands erfolgt zwischen T6 und T8. Die zweite Ladephase erfolgt zwischen T8 und T9, das mit 703 bezeichnet ist. Zum Zeitpunkt T9 erreicht die Spannung über der Energiereserve CER den Wert VER_low = 22,8 V. Das Stromniveau wird automatisch auf den programmierten Erhaltungswert gesetzt, beispielsweise 60 mA. Die Spannung über der Energiereserve wird nun mit der reduzierten Geschwindigkeit auf den Regelwert der Spannung VUP = 22,4 V gebraucht Dies ist mit dem Anstieg 704 bezeichnet

Durch die Trennung der Energiereserve CER vom Aufwärtswandler AW ist das Airbag-Versorgungssystem bereits zum Zeitpunkt T4 bereit. T4 ist zwischen 3 bis 21 ms, je nach Festlegung der Wartezeit. Hierdurch lassen sich neue Funktionalitäten wie das sogenannte Eco-Mode erzielen. Das System führt Funktionen nach Wunsch, beispielsweise Diagnosen-Kommunikation aus, ohne die Airbag-Applikation zu starten und durch Laden der Energiereserve die Zündbereitschaft zu haben. Dies kann beispielsweise für den Service oder einer Fahrzeugvorführung, usw. verwendet werden.

Durch die Programmierung eines geeigneten Primärstromniveaus, also dem Ladestrom, lassen sich zum einen Anforderungen nach einem maximalen Steuergeräte-Eingangstrom während der Erzielung der Feuerbereitschaft, das ist die Ladephase der Energiereserve erreichen, zum anderen eine gewünschte Ladezeit nach Auswahl der nötigen Energiereservegröße.

Der Kapazitätstest in dieser Ladephase benötigt keine weiteren Messquellen als die bereits vorhandene programmierbare Ladestromquelle LSQ. Durch Verwendung zweier Komparatorwerte VER_mind und VER_min +0,5 V kann die Ladezeit mittels eines integrierten Zählers ermittelt werden, die benötigt wird, um das Messband von 0,5 V zu durchlaufen. Als Messstrom wird einheitlich beispielsweise 90 mA verwendet. Die Kapazität CER bestimmt sich demnach durch (90 mA x T Mess) / 0,5 V) bei einer Messzeit von 102,3 ms ergibt dies 18,4 mF.

Der sogenannte ESR-Test, das ist der äquivalente Innenwiderstand der Energiereserve, in dieser Ladephase benötigt ebenfalls keine weiteren Messquellen als die bereits vorhandene programmierbare Ladestromquelle LSQ. Durch Verwendung zweier weiterer Komparatorwerte, nämlich VER_min +1 V und VER_min +1,5 V, kann ermittelt werden, ob der Innenwiderstand der Energiereserve ausreichend klein ist. Bei einer Messstromänderung von 90 mA auf 930 mA wird die Komparatorschwelle VER_min +1 V 10 μs nach Anlegen des Stromstroms abgefragt. Die μs sind wählbar und sind vorliegend derart gewählt, um das Abklingen unduktiver Effekte ohne nennenswerte kapazitive Nachladung auszugleichen. Ist diese Komparatorschwelle überschritten, so beträgt der Innenwiderstand mehr als 0,6 Ω. Ebenso wird die Komparatorschwelle VER_min +1,5 V 10 μs nach Anlegen des Messstroms abgefragt. Ist diese überschritten, so beträgt der Innenwiderstand mehr als 1,2 Ω. Dies ist dann ein zu hoher Wert und eine Warnung wie eine beleuchtete Lampe wird angezeigt.

Durch das Merkmal des invertierten Betriebs serien gekoppelter Wandler entsprechend Figur 4 wird versucht, in der Sperrphase des Aufwärtswandlers AW den angekoppelten Abwärtswandler DC1 wenigstens zeitweise in die Energieaufnahme zu bringen. Diese Maßnahme verringert den Wechselanteil am Ausgang des Aufwärtswandlers AW. Die gleiche Methode wird im Bezug auf die Verkopplung der Abwärtswandler DC1 und DC2 angewendet. Durch das Merkmal induktiv entkoppelter Wandlerausgangskapäzitäten durch entsprechende Leitungsstücke, lässt sich eine stabile Wandler-Regler-Information mit der Stromänderung ableiten.

Durch das Merkmal einer weiteren Komparatorschwelle nach Aufladung der Energiereserve, wobei die Komparatorschwelle mit VUP_low +0,33 V bezeichnet ist, kann eine zyklische Kapazitätsmessung der Energiereserve ausgeführt werden. Die Messung startet nach einem Lesevorgang des Mikrocontrollers auf das Ergebnisregister der zyklischen Kapazitätsmessung. Das Ergebnisregister ist ebenfalls auf dem System-ASIC angeordnet. Durch diesen Vorgang wird die Ladestromquelle LSQ gesperrt. Die Spannung sinkt durch Lasten, die an der Spannung VER anliegen, wie ein Spannungsteiler, ein Sicherheitsschalter, usw. ab. Erreicht die Spannung VER den Wert VER_low so wird mit dem Messstrom, beispielsweise 60 mA die Energiereserve wieder geladen, bis VUP_low +0,33 V erreicht ist. Durch die Wahl eines verringerten Messhubs und eines darauf entsprechend abgestimmten Messstroms bleibt die Auflösung exakt auf dem Wert der initialen Kapazitätsmessung. Erreicht der Wert VER, also der Spannung über der Energiereserve den Wert VER_low +0,33 V wird zusätzlich eine Spannungsflagge in einem Messwertspeicher, der auch auf dem System-ASIC angeordnet ist, auf gut gesetzt. Die Versorgungsspannungsüberwachung führt die Spannungen VUP, VER, VAS, VST50, VST über einen Multiplexer, einem Analog-DigitalWandler des System-ASICs zu, so dass diese Werte seriell vom Mikrocontroller über die SPI-Schnittstelle ausgelesen werden können.

Vorliegend ist auch eine Vermeidung von Messfehlern bei der Kapazitätsmessung und der Messung des äquivalenten Innenwiderstands der Energiereserve vorgesehen. Diese Messfehler sollen bei der Situation eines Einbruchs der Batteriespannung vermieden werden. Hierzu werden vorliegend zwei alternative Verfahren vorgeschlagen:

a) Die Eingangsspannung UB wird mit einem Komparator überwacht, sinkt diese während einer laufenden Messung mindestens einmal unter einer Schwelle ab, wird jede laufende Messung mit nicht ausführbar im Messspeicher gekennzeichnet.

b) Der Stromregler der Ladestromquelle LSQ erzeugt einen Einregelstatus in der Messanwendung. Nur wenn dieser bis auf Einschwingzeiten die gleiche Einregelzeit erreicht wie die Messzeit selbst, ist die laufende Messung ohne Störung verlaufen und damit als gültig anzusehen, andernfalls erhält der Messwert im Messspeicher eine nicht-ausführbar-Kennzeichnung. Zur Erfassung des Einregelstatus kann ebenfalls ein 10 Bitzähler mit einer Taktfrequenz von 5 kHz eingesetzt werden, auch geringere Auflösungen sind vorliegend denkbar.

**Patentansprüche**

1.  Steuergerät für einen Betrieb eines Sicherheitssystems für ein Fahrzeug mit:

- einem Aufwärtswandler (AW), der als einen Schaltwandler ausgebildet ist, und der eine von einer Fahrzeugbatteriespannung abgeleitete Eingangsspannung (UB) in eine höhere Ladespannung (VUP) an seinen Ausgang wandelt,
- wenigstens einem Energiereservespeicher (CER), der mittels der Ladespannung (VUP) für den Betrieb des Sicherheitssystems in einem Autarkiefall aufgeladen wird, **dadurch gekennzeichnet, dass** wenigstens ein Abwärtswandler (DC1, DC2) invertiert zum Aufwärtswandler (AW) betrieben wird, wobei der wenigstens eine Abwärtswandler (DC1, DC2) die Ladespannung (VUP) oder eine vom wenigstens einen Energiereservespeicher (CER) abgegebene Spannung abwärts wandelt.

2. Steuergerät nach Anspruch 1, **dadurch gekennzeichnet, dass** der wenigstens eine Abwärtswandler (DC1, DC2) unmittelbar an den Aufwärtswandler angeschlossen ist.

3. Steuergerät nach Anspruch 1 oder 2, **dadurch gekennzeichnet, dass** am Ausgang des Aufwärtswandlers (AW) eine kapazitive Last (C1, C2) zur Einstellung einer Anstiegszeit der Ladespannung (VUP) angeschlossen ist.

4. Steuergerät nach einem der vorhergehenden Ansprüche, **dadurch gekennzeichnet, dass** das Steuergerät eine Logik aufweist, die in Abhängigkeit von wenigstens einem elektrischen Parameter am Energiereservespeicher (CER) während des Aufladens des Energiereservespeichers (CER) eine initiale Messung einer Kapazität (CER) des Energiereservespeichers und im Anschluss daran eine Messung eines äquivalenten Innenwiderstands des Energiereservespeichers (CER) ausführt.

5. Steuergerät nach Anspruch 4, **dadurch gekennzeichnet, dass** die Logik wenigstens einen Komparator für einen Vergleich des wenigstens eines elektrischen Parameters mit einer vorgegebenen Schwelle aufweist, wobei die initiale Messung der Kapazität und die Messung des Innenwiderstands in Abhängigkeit von diesem Vergleich ausgeführt werden.

6. Steuergerät nach Anspruch 4 oder 5, **dadurch gekennzeichnet, dass** die Logik derart ausgebildet ist, dass die Logik nach dem Aufladen der Energiereserve zyklisch eine weitere Messung der Kapazität durchführt.

7. Verfahren für den Betrieb eines Sicherheitssystems für ein Fahrzeug mit folgenden Verfahrenschritten:

- Wandeln einer von einer Fahrzeugbatteriespannung abgeleiteten Eingangsspannung (UB) in eine höhere Ladespannung (VUP) an einem Ausgang eines Auswärtswandlers (AW), der als Schaltwandler ausgebildet ist,
- Aufladen wenigstens eines Energiereservespeichers (CER) mittels der Ladespannung (VUP) für den Betrieb des Sicherheitssystems in einem Autarkiefall, **dadurch gekennzeichnet, dass** wenigstens ein Abwärtswandler (DC1, DC2) invertiert zum Aufwärtswandler (AM betrieben wird, wobei der wenigstens eine Abwärtswandler (DC1, DC2) die Ladespannung (VUP) oder eine vom wenigstens einen Energiereservespeicher (CER) abgegebene Spannung abwärts wandelt.

8. Verfahren nach Anspruch 7, **dadurch gekennzeichnet, dass** der wenigstens eine Abwärtswandler (DC1, DC2) unmittelbar mit dem Aufwärtswandler (AW) verbunden wird.

**Claims**

1. Controller for operation of a safety system for a vehicle having:

- an up-converter (AW) that is in the form of a switched-mode converter and that converts an input voltage (UB), which is derived from a vehicle battery voltage, into a higher charging voltage (VUP) at its output,
- at least one energy reserve store (CER) that is charged by means of the charging voltage (VUP) for operation of the safety system in an instance of self-sufficiency, **characterized in that** at least one down-converter (DC1, DC2) is operated in inverted fashion with respect to the up-converter (AW), wherein the at least one down-converter (DC1, DC2) down-converts the charging voltage (VUP)- or a voltage that is output by the at least one energy reserve store (CER).

2. Controller according to Claim 1, **characterized in that** the at least one down-converter (DC1, DC2) is connected directly to the up-converter.

3. Controller according to Claim 1 or 2, **characterized in that** a capacitive load (CI, C2) for setting a rise time for the charging voltage (VUP) is connected to the output of the up-converter (AW).

4. Controller according to one of the preceding claims, **characterized in that** the controller has a piece of logic that takes at least one electrical parameter on the energy reserve store (CER) during the charging of the energy reserve store (CER) as a basis for taking an initial measurement for a capacitance (CER) of the energy reserve store and subsequently a measurement for an equivalent internal resistance of the energy reserve store (CER).

5. Controller according to Claim 4, **characterized in that** the logic has at least one comparator for comparing the at least one electrical parameter with a prescribed threshold, wherein the initial measurement of the capacitance and the measurement of the internal resistance are taken on the basis of this comparison.

**6.** Controller according to Claim 4 or 5, **characterized in that** the logic is in a form such that the logic cyclically takes a further measurement for the capacitance after the energy reserve has been charged.

**7.** Method for the operation of a safety system for a vehicle having the following method steps:

- an input voltage (UB), which is derived from a vehicle battery voltage, is converted into a higher charging voltage (VUP) at an output of an up-converter (AW) that is in the form of a switched-mode converter,
- at least one energy reserve store (CER) is charged by means of the charging voltage (VUP) for operation of the safety system in an instance of self-sufficiency, **characterized in that** at least one down-converter (DC1, DC2) is operated in inverted fashion with respect to the up-converter (AW), wherein the at least one down-converter (DC1, DC2) down-converts the charging voltage (VUP) or a voltage that is output by the at least one energy reserve store (CER).

**8.** Method according to Claim 7, **characterized in that** a direct connection is made from the at least one down-converter (DC1, DC2) to the up-converter (AW).

**Revendications**

**1.** Contrôleur pour un fonctionnement d'un système de sécurité pour un véhicule, comprenant :

- un convertisseur élévateur (AW), lequel est réalisé sous la forme d'un convertisseur à découpage et qui convertit une tension d'entrée (UB) dérivée d'une tension de batterie de véhicule en une tension de charge (VUP) plus élevée à sa sortie,
- au moins un accumulateur de réserve d'énergie (CER), lequel est chargé au moyen de la tension de charge (VUP) pour le fonctionnement du système de sécurité dans un cas de fonctionnement en autonomie, **caractérisé en ce qu'**au moins un convertisseur abaisseur (DC1, DC2) fonctionne dans le sens inverse du convertisseur élévateur (AW), l'au moins un convertisseur abaisseur (DC1, DC2) abaissant par conversion la tension de charge (VUP) ou une tension délivrée par au moins un accumulateur de réserve d'énergie (CER).

**2.** Contrôleur selon la revendication 1, **caractérisé en ce que** l'au moins un convertisseur abaisseur (DC1, DC2) est raccordé directement au convertisseur élévateur.

**3.** Contrôleur selon la revendication 1 ou 2, **caractérisé en ce qu'**à la sortie du convertisseur élévateur (AW) est raccordée une charge capacitive (Cl, C2) pour régler un temps de montée de la tension- de charge (VUP).

**4.** Contrôleur selon l'une des revendications précédentes, **caractérisé en ce que** le contrôleur présente une logique qui, en fonction d'au moins un paramètre électrique sur l'accumulateur de réserve d'énergie (CER), effectue pendant la charge de l'accumulateur de réserve d'énergie (CER) une mesure initiale d'une capacité (CER) de l'accumulateur de réserve d'énergie et ensuite une mesure d'une résistance interne équivalente de l'accumulateur de réserve d'énergie (CER).

**5.** Contrôleur selon la revendication 4, **caractérisé en ce que** la logique présente au moins un comparateur pour une comparaison de l'au moins un paramètre électrique avec un seuil prédéfini, la mesure initiale de la capacité et la mesure de la résistance interne étant effectuées en fonction de cette comparaison.

**6.** Contrôleur selon la revendication 4 ou 5, **caractérisé en ce que** la logique est configurée de telle sorte que la logique, après la charge de la réserve d'énergie, exécute cycliquement une mesure supplémentaire de la capacité.

**7.** Procédé pour faire fonctionner un système de sécurité pour un véhicule, comprenant les étapes de procédé suivantes :

- conversion d'une tension d'entrée (UB) dérivée d'une tension de batterie de véhicule en une tension de charge (VUP) plus élevée à une sortie d'un convertisseur élévateur (AW), lequel est réalisé sous la forme d'un convertisseur à découpage,
- charge d'au moins un accumulateur de réserve d'énergie (CER) au moyen de la tension de charge (VUP) pour le fonctionnement du système de sécurité dans un cas de. fonctionnement en autonomie, **caractérisé en ce qu'**au moins un convertisseur abaisseur (DC1, DC2) fonctionne dans le sens inverse du convertisseur élévateur (AW), l'au moins un convertisseur abaisseur (DC1, DC2) abaissant par conversion la tension de charge (VUP) ou une tension délivrée par au moins un accumulateur de réserve d'énergie (CER).

**8.** Procédé selon la revendication 7, **caractérisé en ce que** l'au moins un convertisseur abaisseur (DC1, DC2) est relié directement avec le convertisseur élévateur (AW).

Fig. 1

**Fig. 2**

**Fig. 3**

Fig. 4

EP 2 566 725 B1

**PWM T1, T2**

T1on | T1off

T2on | T2off

**PWM T3, T4**

T3off | T3on

T4on | T4off

**PWM T7, T8**

T7off | T7on

T8on | T8off

T = 500ns

**Fig. 5**

Fig. 6

Fig. 7

EP 2 566 725 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19542085 B4

- DE 102004057690 A1